# EUROPÄISCHE PATENTSCHRIFT

(11) **EP 0 620 329 B1**
(45) Veröffentlichungstag und Bekanntmachung des Hinweises auf die Patenterteilung: **28.07.1999**
(21) Anmeldenummer: 94104288.9
(22) Anmeldetag: 18.03.1994
(51) Int. Cl.: E03F 5/04, G05D 7/01

(54) **Abflussregulator insbesondere für ein Regenwasser aufnehmendes Rückhaltebecken**
Flow regulator particularly for rainwater receiving basin
Régulateur de débit particulièrement pour des basins d'eau pluviale

(30) Priorität: 29.03.1993 CH 95493
(43) Veröffentlichungstag der Anmeldung: 19.10.1994
(73) Patentinhaber: Schmid, August, CH-8603 Schwerzenbach (CH)
(72) Erfinder: Schmid, August, CH-8603 Schwerzenbach (CH)
(74) Vertreter: Luchs, Willi

(56) Entgegenhaltungen:
- EP-A- 0 323 393
- EP-A- 0 503 209
- DE-A- 3 914 702
- DE-A- 4 125 238
- FR-A- 2 678 041

## Beschreibung

Die Erfindung betrifft ein Abflussregulator insbesondere für ein Regenwasser aufnehmendes Rückhaltebecken nach dem Oberbegriff des Anspruchs 1.

Bei einem gattungsmässigen Abflussregulator nach der EP-A 0 323 393 ist eine Regelvorrichtung für den Abfluss einer Flüssigkeit aus einem Behälter erläutert, welche aus einem um eine Drehachse schwenkbar gelagerten Druckaufnehmer (9) und einem mit diesem über ein Gestänge (18) verbundenen Drosselorgan (17) besteht. Der Druckaufnehmer ist oberhalb eines am Boden des Behälters (1) angeordneten Ablaufkanals (4) angeordnet und es wirkt auf diesen einerseits unmittelbar die Flüssigkeit im Behälter und andererseits ein Raum (13), der über einen Saugkanal (7) mit dem Ablaufkanal verbunden ist. Der Druckaufnehmer (9) wird durch die sich beidseitig zu ihm einstellenden Drücke in eine Schwenkposition und mit ihm das Drosselorgan (17) in eine bestimmte Öffnungsstellung bewegt, wobei dies von der Ausflussgeschwindigkeit abhängt. Diese Regelvorrichtung setzt jedoch eine ausreichend saubere Flüssigkeit voraus, denn bei einem Vorkommen von Verunreinigungen in derselben kann dies zu einem schnellen Blockieren oder zumindest nicht mehr einwandfreien Schwenken des Druckaufnehmers führen und ausserdem können sich im unteren Ende des Saugrohrs (7) Ablagerungen bilden, wodurch der Schieber (17) nicht in die gewünschte Stellung verschoben würde.

Bei einer Vorrichtung gemäss der Druckschrifi FR-A 2 678 041 ist ein zylinderförmiger Schliesskörper in einem Rohrstück angeordnet, wobei dieser Schliesskörper axial an einer im Rohrstück fixierten Achswelle mit zwei Kolben geführt ist. Durch die Achswelle erstreckt sich eine Bohrung, welche in je eine Kammer führt, die von je einem der Kolben und dem Schliesskörper gebildet ist, wobei ein durch das Rohr strömendes Medium auf der Einlasseite des Rohrstükkes in diese Bohrung fliesst. Des weiteren sind zwischen dem einen Kolben und dem Drosselelement Federorgane angeordnet, die eine Druckkraft auf das Drosselelement in Öffnungsrichtung bewirken. Ausserdem ist bei dieser Vorrichtung eine Verbindung mit der Umgebungsluft vorgesehen, welche zusätzlich auf das Drosselelement einwirkt. Diese Vorrichtung eignet sich daher für spezielle Durchflusssteuerungen. Bei ihr besteht jedoch der Nachteil, dass bei Verwendung derselben in einem Rückhaltebecken beim Anliegen der Wassersäule einlasseitig auf das Drosselelement eine Kraftwirkung in Öffnungsrichtung ausgeübt würde, was bei einem gattungsmässigen Abflussregulator nicht funktionieren würde.

Bei einem bekannten Abflussregulator ist eine Drosseleinrichtung vorgesehen, die am Ausfluss eines Rückhaltebeckens montiert wird und bei der im Wesentlichen mindestens eine Blende mit einer kontinuierlichen oder aber einer wehrähnlichen Querschnittsverengung vorgesehen ist. Dies bewirkt eine Drosselung des aus dem Rückhaltebecken durch den Abflussregulator ausfliessenden Wassers, dabei je nach Abflussgeschwindigkeit mehr oder weniger gedrosselt wird, wobei die Abflussgeschwindigkeit an sich mit steigendem Füllstand des Wassers im Rückhaltebecken zunimmt. Mit dieser Drosseleinrichtung wird jedoch nur eine beschränkte und ungenügende Drosselwirkung des üblicherweise in einen Abwasserkanal fliessenden Regenwassers erzielt. Man will ja grundsätzlich mit diesem Rückhaltebecken erreichen, dass der Abwasserkanal beispielsweise bei einem Gewitter nicht in kürzester Zeit überfüllt wird, sondern dass das in grossen Mengen anfallende Wasser darin zurückgehalten wird. Der Abflussregulator dient dabei als zusätzliches Steuerglied für die aus dem Bekken ausfliessende Wassermenge. Ein weiterer Nachteil des oben näher erläuterten Abflussregulators ist darin zu sehen, als dieser bei der Montage oder beim Demontieren beispielsweise zum Reinigen nur erreichbar ist, wenn das Rückhaltebecken leer ist und man in dieses hinabsteigen kann.

Aufgabe der vorliegenden Erfindung besteht demgegenüber darin, einen Abflussregulator nach der eingangs beschriebenen Gattung derart weiterzubilden, dass mit ihm bei jeder Füllhöhe ein optimierter Ausfluss der Wassermenge pro Zeiteinheit erzielt wird und er dabei aus einer äusserst einfachen und billigen Konstruktion besteht, und dass er fernerhin sehr bequem montier- bzw. demontierbar ist.

Erfindungsgemäss ist die Aufgabe durch die Merkmale des kennzeichnenden Teils des Anspruchs 1 gelöst.

Mit dieser erfindungsgemässen Ausbildung des Abflussregulators ist eine konstruktiv einfache Lösung erzielt worden, bei der ein optimaler und sehr betriebssicherer Abfluss von Regenwasser gewährleistet ist. Die ein selbsttätig steuerndes Ventil mit einem die Ausflussöffnung verändernden Drosselelement aufweisende Drosseleinrichtung ist vorzugsweise derart ausgebildet, dass aus dem Rückhaltebecken bei jedem Füllstand eine annähernd konstante Wassermenge pro Zeiteinheit abfliesst. Im Prinzip lässt sich diese Wassermengenleistung auch durch entsprechende Ausbildung des Ventils je nach Bedarf anders bestimmen.

Vorteilhaft ist eine Vorrichtung zum Befestigen und Lösen des Abflussregulators an und von einem im Rückhaltebecken angebrachten Abflussrohr vorgesehen, mittels welcher dieser Abflussregulator von ausserhalb des Rückhaltebeckens an dieses Anschlussrohr befestigbar ist. Zu diesem Zwecke weist die Vorrichtung eine mit ihr koppel- resp. wegnehmbare Montagestange auf, die wie oben erläutert zum Ein- und Ausführen des Abflussregulators und zum Befestigen desselben an das Anschlussrohr dient.

Die Erfindung sowie weitere Vorteile derselben sind nachfolgend anhand der Zeichnung näher erläutert. Es zeigt:
- Fig.1: einen Längsschnitt durch ein teilweise dargestelltes Rückhaltebecken mit einem erfindungsgemässen Abflussregulator,
- Fig.2: eine Vorderansicht der einen Hälfte des Abflussregulators nach der Fig.1,
- Fig.3: eine Draufsicht auf den Abflussregulator nach der Fig.1,
- Fig.4: einen Längsschnitt durch einen teilweise dargestellten alternativen Abflussregulator,
- Fig.5 und Fig.6: je einen Längsschnitt durch die Montagestange des Abflussregulators in gekoppeltem resp. entkoppeltem Zustand.

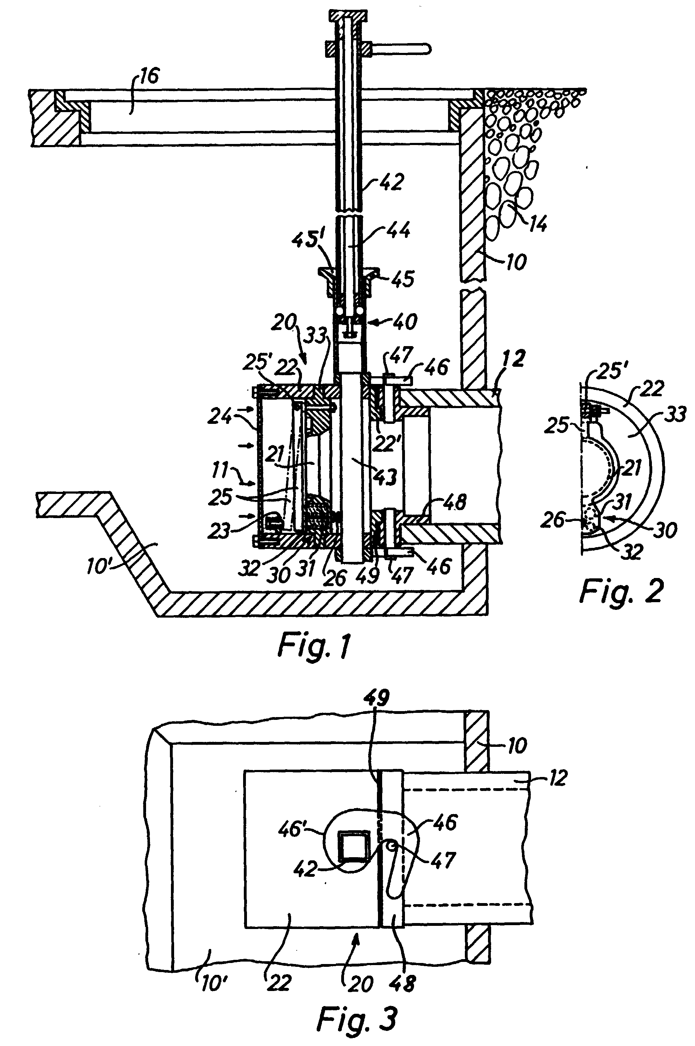

Fig.1 zeigt ein Rückhaltebecken 10, das normalerweise in einem Boden 14 eingebettet ist und eine obere Öffnung 16 hat, durch die das Regenwasser einfliessen kann. Am unteren Ende 10' dieses Rückhaltebeckens 10 ist ein zur Horizontalen leicht geneigtes Abflussrohr 12 einzementiert, an welches ein Flansch 48, an den seinerseits ein Abflussregulator 20 befestigt ist.

Dieser erfindungsgemässe Abflussregulator 20 umfasst im wesentlichen einen eingangsseitig mit einem Filter 24 versehenen Rohrstutzen 22, ein in diesem angeordnetes Ventil 30 und eine Vorrichtung 40 mit einer an diese koppelbaren Montagestange 42. Der Rohrstutzen 22 weist an seiner dem Abflussrohr 12 zugekehrten Stirnseite eine Nabe 22' auf, die im Flansch 48 zentriert ist. Die Vorrichtung 40 ihrerseits setzt sich aus einer sich durch den Rohrstutzen 22 des Abflussregulators 20 erstreckenden, darin drehbaren Welle 43, aus zwei beidseitig an letzterer fixierten Besfestigungselementen 46 und aus einem ebenfalls mit der Welle 43 verbundenen Kupplungsteil 45 zusammen. Damit ermöglicht diese Vorrichtung 40 zum einen ein Befestigen resp. Lösen des Abflussregulators 20 an den Flansch 48 und zum anderen ein Koppeln resp. Entkoppeln der Montagestange 42 an den Abflussregulator 20. Der Kupplungsteil 45 hat zweckmässigerweise an seiner Oberseite eine trichterförmige Öffnung 45', vermittels der die Montagestange 42 darin praktisch selbstzentrierend einführbar ist.

Das in dem Abflussregulator 20 ausgebildete, sich selbsttätig steuernde Ventil 30 besteht aus einem im Rohrstutzen 22 befestigten und eine Ausflussöffnung 21 enthaltenden Ring 33, einer die Ausflussöffnung 21 überdeckende, als Drosselement ausgebildete Klappe 25, diese verschiebende, im Ring 33 angeordneter Federn 31, 32 sowie aus zwei die Klappe 25 in ihrem Hub begrenzende Anschläge 23, 26. Letztere können verstellt werden und bilden die beiden Endstellungen der Klappe 25. Im leeren Zustand des Beckens 10 befindet sich die am Ring 33 über ein Scharnier 25' schwenkbar gehaltene Klappe 25 in der einen strichpunktiert veranschaulichten Endstellung mit Kontakt an dem Anschlag 23. Wenn nun ins Rückhaltebecken 10 Regenwasser fliesst und sich infolgedessen ein Wassersäulendruck 11 beim Einlauf des Abflussregulators bildet, dann wird aufgrund dessen die Klappe 25 eben von dem genannten Druck gegen die Federn 31, 32 gepresst und bewirkt eine Verschiebung derselben bis zur anderen vom Anschlag 26 gebildeten Endstellung, bei welcher ein Minimalbfluss des Wassers stattfindet.

In Fig.2 ist nochmals die an dem Scharnier 25' angelenkte und die Ausflussöffnung überdeckende Klappe 25 verdeutlicht. Diese liegt gegenüberliegend an vier, je zwei gleichartig ausgebildeten Federn 31, 32 an, welche zusammen eine Federkraft-Kennlinie bilden, die derart ausgelegt sind, dass sich daraus resultierend der Verschiebeweg der Klappe 25 und damit die Ausflussöffnung nicht proportional zum Füllstand ändert, sondern dass bereits bei einem geringen Füllstand, d.h. bei ca. 20% des vollen Rückhaltebeckens, ein Verschiebeweg von bis zu 50% seines gesamten Hubes erfolgt ist, hingegen danach sich dieser Verschiebeweg im Verhältnis zu dem steigenden Füllstand verringert, bis die Klappe 25 bei annähernd dem vollen Becken 10 am Anschlag 26 ansteht. Dadurch wird erreicht, dass wenn beispielsweise ein starkes Gewitter auftritt, bereits bei geringem Füllstand des Rückhaltebeckens 10 eine starke Drosselung des Wasserausflusses erfolgt und dass damit das nachfolgende, sich ebenfalls sehr schnell füllende Kanalisationsrohr nur mit einer geringen zusätzlichen Wassermenge belastet wird.

In Fig.3 ist eine Ansicht von oben auf diesen Abflussregulator 20 gezeigt, bei dem allen voran dessen Befestigung an den an das Abflussrohr 12 fixierten Flansch 48 verdeutlicht ist. Das jeweilige Befestigungselement 46 umgreift dabei einen radial aus dem Flansch 48 ragenden Haltebolzen 47. Diese wirken derart zusammen, dass beim Schliessen derselben in der Art einer Kniehebelwirkung ein elastischer Dichtring 49 zwischen dem Abflussregulator 20 und dem Abflussrohr 12 bis zu einem Totpunkt zusammengepresst und beim Erreichen der Endstellung des Befestigungselementes 46 wieder etwas gelöst wird. Währenddem beim Lösen der beiden das Befestigungselement 46 über die Montagestange 42 in entgegengesetzte Richtung gedreht wird und nach einer Drehung von annähernd 90° eine äussere Kurvenbahn 46' von ihm mit dem Haltebolzen 47 in Berührung gelangt, mittels der der Abflussregulator 20 vom Ausflussrohr 12 weggedrückt wird und somit ein sicheres Trennen der beiden gewährleistet ist, denn in der Praxis kann es vorkommen, dass die beiden zusammenkleben.

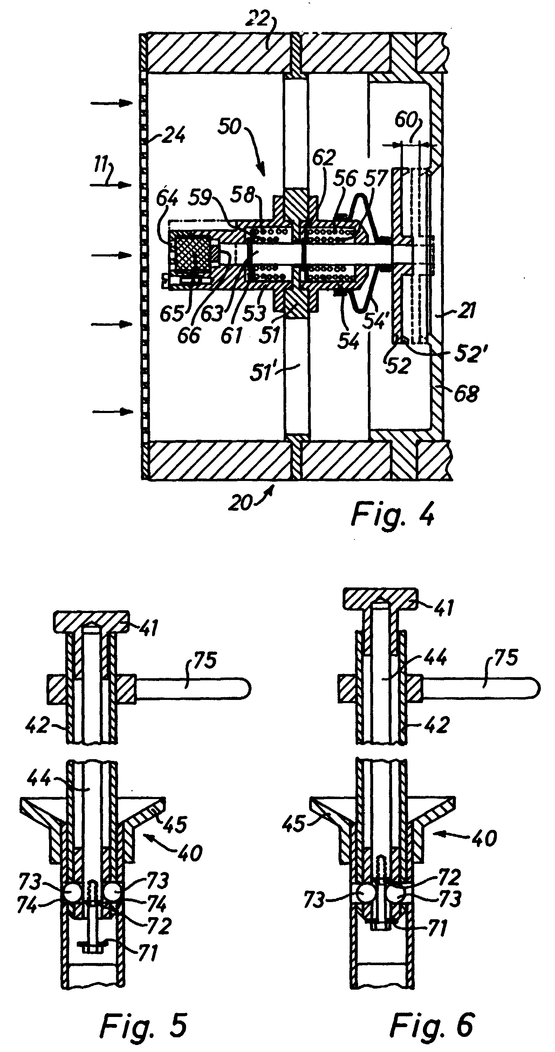

Gemäss der Variante des Abflussregulators 20 nach Fig.4 ist ein Ventil 50 vorgesehen, dessen Federn 56, 57, 58, 59 und der mit diesen über ein Verbindungselement 63 verbundene Teller 52 konzentrisch zur Ausflussöffnung 21 angeordnet sind. Das Ventil 50 ist dabei zentral an einem Öffnungen 51' enthaltenden Ring 51 lösbar befestigt, wobei letzterer wie auch der separate Ring 68 mit der Ausflussöffnung 21 am Rohrstutzen 22 gesichert sind. Die Federn 56 bis 59 und das Verbindungselement 63 sind in einem zweiteiligen Ventilgehäuse 53, 54 längsbeweglich gehalten, welches am Ausgang eine Dichtung 54, indessen eingangsseitig Öffnungen 64 hat und nachfolgend ein Filter 65 eingelegt ist. Dadurch ist die dem Teller 52 gegenüberliegende Stirnseite 66 des Verbindungselementes 63 ebenfalls vom Wassersäulendruck beaufschlagt. Die Federn 56 bis 59 sind zueinander derart angeordnet, dass diese beim Verschieben des Verbindungselementes 53 in Drosselrichtung nacheinander zur Wirkung kommen. Dies führt wie bereits oben erwähnt dazu, dass sich der Teller 52 nicht proportional zum Füllstand verschiebt, sondern dass beispielsweise
- bis 10% des gesamten Füllstandes des Tellers unverändert offen bleibt,
- von 10-20% des Füllstandes des Tellers um ca. 40% seines gesamten Verschiebeweges 60 in Schliessrichtung hin bewegt wird und dabei nur die erste Feder 56 wirkt,
- von 20-40% des Füllstandes sich der Teller um ca. weitere 25% mit Wirkung zweier Federn 56,58 verschiebt,
- von 40-65% des Füllstandes sich der Teller um ca. 20% mit Wirkung dreier Federn 56, 58, 57 verschiebt,
- von 65-100% des Füllstandes sich der Teller um die restlichen 15% mit Wirkung aller vier Federn 56, 58, 57, 59 verschiebt.
Wenn das Rückhaltebecken voll aufgefüllt ist, berührt der Teller 52 den mit der Ausflussöffnung 21 versehenen Ring 68, wie dies gestrichelt dargestellt ist. Seitliche Ausnehmungen 52' an der vorderen Stirnseite des Tellers 52 ermöglichen den angestrebten Minimalabfluss bei voll gedrosseltem Ventil 50.

Die in Fig.5 und Fig.6 gezeigte Montagestange 42 und der mit dem Abflussregulator verbundene Kupplungsteil 45 sind in entkoppeltem respektive gekoppeltem Zustand veranschaulicht und sind zu diesem Zwecke folgendermassen ausgebildet: Die Montagestange 42 hat in seinem Innern eine darin geführte Kopplungsstange 44, die am oberen Ende mit einem Verstellknopf 41 verbunden ist und am unteren Ende einen Anschlag 71 sowie oberhalb diesem eine schräge Erweiterung 72 aufweist. In dem in Fig.5 gezeigten gekoppeltem Zustand ist die als Vierkant ausgebildete Montagestange 42 in den Kupplungsteil 45 drehgesichert eingeschoben und in ihr befindliche Kugeln 73 sind von der nach unten bewegten Kopplungsstange 44 begrenzt nach aussen gedrückt und gelangen dadurch in Ausnehmungen 74 des Kupplungsteils 45. Beim Entkoppeln gemäss Fig.6 ist der Verstellknopf 41 und mit ihm die Kopplungsstange 44 manuell nach oben geschoben. Wenn nun die Montagestange 42 über den zum Verdrehen derselben dienende Hebel 75 hochgezogen wird, so werden die Kugeln 73 radial nach innen gedrängt und geben diese damit frei.

Zu der vorliegenden Erfindung wären natürlich noch weitere Ausführungsvarianten denkbar. So könnte eines oder auch mehrere Ventil/e auf der dem Becken abgekehrten Saugseite angeordnet sein. Auch die Abflussmenge liesse sich durch entsprechende Auslegung der Federn eines Ventiles anders als oben beschrieben steuern.

## Patentansprüche

1. Abflussregulator insbesondere für ein Regenwasser aufnehmendes Rückhaltebecken, mit mindestens einer Drosseleinrichtung am Ausfluss des Rückhaltebeckens, die zur Erzielung einer mit steigendem Füllstand des Regenwassers im Rückhaltebecken reduzierten Abflussmenge pro Zeiteinheit im Vergleich zu einem Ausfluss ohne Drosseleinrichtung dient, wobei die Drosseleinrichtung durch ein sich in Abhängigkeit des Füllstandes selbsttätig steuerndes Ventil (30,50) mit einem die Ausflussöffnung (21) des Rückhaltebeckens (10) verändernden Drosselelement gebildet ist, dadurch gekennzeichnet, dass dass das als Klappe (25) oder als Teller (52) ausgebildete Drosselelement derart angeordnet ist, dass es vom jeweiligen Wassersäulendruck in Schliessrichtung gedrückt ist, und dass das Drosselelement ausserdem mit einem im Ventil (30,50) vorgesehenen Federelement derart zusammenwirkt, dass es bei leerem Rückhaltebecken (10) in eine annähernd volle Offenstellung verschoben ist und sich mit steigendem Wassersäulendruck gegen das Federelement drückend in Schliessrichtung verschiebt.

2. Abflussregulator nach Anspruch 1, dadurch gekennzeichnet, dass das sich selbsttätig steuernde Ventil (30,50) derart ausgebildet ist, dass bei jedem Füllstand aus dem Rückhaltebecken (10) eine annähernd konstante Wassermenge pro Zeiteinheit abfliesst.

3. Abflussregulator nach Anspruch 1 oder 2, dadurch gekennzeichnet, dass die Klappe (25,52) oder der Teller (52) sich mit steigendem Wassersäulendruck gegen das Federelement drückend in Schliessrichtung verschiebt, bis bei maximalem Füllstand die Ausflussöffnung (21) auf ein Mindestmass reduziert ist.

4. Abflussregulator nach Anspruch 3, dadurch gekennzeichnet, dass sich das Federelement aus mehreren Federn (31,32,56,57,58,59) zusammensetzt, die derart bemessen sind, dass sich die Klappe (25) oder der Teller (52) zwecks Erzielung einer konstanten Abflussmenge pro Zeiteinheit mit zunehmendem Wassersäulendruck proportional abnehmend in Schliessrichtung hin bewegt.

5. Abflussregulator nach einem der Ansprüche 1 bis 4, dadurch gekennzeichnet, dass die Klappe (25) seitlich zur Ausflussöffnung (21) schwenkbar gehalten ist und gegenüberliegend von dem vier Federn (31,32) aufweisenden Ventil (30) in die entsprechende Drosselstellung bewegbar ist.

6. Abflussregulator nach einem der Ansprüche 1 bis 4, dadurch gekennzeichnet, dass das Ventil (50), dessen Federn (56,57,58,59) und der mit diesen über ein Verbindungselement (63) verbundene Teller (52) konzentrisch zur Ausflussöffnung (21) angeordnet sind.

7. Abflussregulator nach Anspruch 6, dadurch gekennzeichnet, dass das Verbindungselement (63) auf der des Tellers (52) gegenüberliegenden Stirnseite (66) ebenfalls vom Wassersäulendruck beaufschlagt ist.

8. Abflussregulator nach einem der vorhergehenden Ansprüche, dadurch gekennzeichnet, dass eine Vorrichtung (40) zum Befestigen und Lösen des Abflussregulators (20) an und von einem im Rückhaltebecken (10) angebrachten Abflussrohr (12) vorgesehen ist, mittels welcher dieser Abflussregulator (20) von ausserhalb des Rückhaltebeckens (10) an dieses Abflussrohr (12) befestigbar ist.

9. Abflussregulator nach Anspruch 8, dadurch gekennzeichnet, dass die Vorrichtung (40) eine mit ihr koppelbare Montagestange (42) aufweist, die zum Ein- und Ausführen des Abflussregulators (20) und zum Befestigen desselben an das Abflussrohr (12) dient.

10. Abflussregulator nach Anspruch 9, dadurch gekennzeichnet, dass die Montagestange (42) eine von ihrer Oberseite über einen Verstellknopf (41) betätigbare, mit einem Kupplungsteil (45) der Vorrichtung (40) zusammenwirkenden Kupplung aufweist.

11. Abflussregulator nach Anspruch 8, 9 oder 10, dadurch gekennzeichnet, dass eine Welle (43) vom Kupplungsteil (45) der Vorrichtung (40) durch den Abflussregulator (20) ragt und beidseitig zu diesem mit je einem aussenliegenden Befestigungselement (46) versehen ist, welche durch Drehen der Montagestange (42) und damit des Kupplungsteils (45) mit einem Haltebolzen (47) am Abflussrohr (12) in Eingriff gelangen.

12. Abflussregulator nach Anspruch 11, dadurch gekennzeichnet, dass die Befestigungselemente (46) jeweils derart mit dem Haltebolzen (47) zusammenwirken, dass beim Schliessen derselben in der Art einer Kniehebelwirkung ein elastischer Dichtring (49) zwischen dem Abflussregulator (20) und dem Abflussrohr (12) zusammengepresst und beim Erreichen der Endstellung wieder etwas gelöst wird, während beim Lösen der beiden das Befestigungselement (46) über die Montagestange (42) in entgegengesetzte Richtung gedreht wird und nach einer Drehung von annähernd 90° eine äussere Kurvenbahn (46') von ihm mit dem Haltebolzen (47) in Berührung gelangt, mittels der der Abflussregulator (20) vom Ausflussrohr (12) weggedrückt wird und somit ein sicheres Trennen der beiden gewährleistet ist.

## Claims

1. Discharge regulator especially for a rainwater-collecting reservoir, with at least one throttle device on the discharge ofthe reservoir, which serves to achieve a reduced discharge quantity per unit of time with increasing fill level of the rainwater in the reservoir in comparison with a discharge without throttle device, wherein the throttle device consists of an automatically controlled valve depending on the fill level (30, 50) with a throttle element which alters the discharge opening (21) of the reservoir (10) characterised by the fact that the throttle element in the form of a flap (25) or a plate (52) is arranged in such a way that it is pressed in the direction of closure by the pressure of the respective water column and that the throttle element also works together with a spring element provided in the valve (30, 50) in such a way that when the reservoir (10) is empty it is displaced into a roughly fully-open position and as the pressure of the water column increases, moves against the spring element, pressing it in the direction of closure.

2. Discharge regulator according to Claim 1, characterised by the fact that the automatically controlled valve (30, 50) is designed in such a way that an approximately constant quantity of water per unit of time is discharged from the reservoir (10) at any fill level.

3. Discharge regulator according to Claim 1 or 2, characterised by the fact that the valve (25, 52) or the plate (52) is displaced with increasing water column pressure against the spring element in the direction of closure until at maximum fill level the discharge opening (21) is reduced to a minimum size.

4. Discharge regulator according to Claim 3, characterised by the fact that the spring element comprises several springs (31, 32, 56, 57, 58, 59), which are dimensioned in such a way that the flap (25) or the plate (52) moves in the direction of closure such that it decreases in proportion to the water column pressure for the purpose of achieving a constant discharge quantity per unit of time.

5. Discharge regulator according to one of the claims 1 - 4, characterised by the fact that the flap (25) is held pivotably to the side of the discharge opening (21) and can be moved into the corresponding throttle position opposite the valve (30) displaying four springs (31, 32).

6. Discharge regulator according to one of the claims 1 - 4, characterised by the fact that the valve (50), its springs (56, 57, 58, 59) and the plate (52) connected with these via a connecting element (63) are arranged concentrically to the discharge opening (21).

7. Discharge regulator according to Claim 6, characterised by the fact that the connecting element (63) on the front side (66) lying opposite the plate (52) is also impinged upon by the water column pressure.

8. Discharge regulator according to one of the preceding claims, characterised by the fact that a device (40) for the fastening and releasing of the discharge regulator (20) is provided on and by a discharge pipe (12) fitted in the reservoir (10), by means of which this discharge regulator (20) can be fastened from outside the reservoir (10) on this discharge pipe (12).

9. Discharge regulator according to Claim 8, characterised by the fact that the device (40) demonstrates an erection rod (42) which can be coupled with it, and which serves in the insertion and removal of the discharge regulator (20) and in the fixing of the same on the discharge pipe (12).

10. Discharge regulator according to Claim 9, characterised by the fact that the erection rod (42) demonstrates a coupling which can be actuated from its upper side via an adjustment knob (41), with a coupling part (45) working together with the device (40).

11. Discharge regulator according to Claim 8, 9 or 10, characterised by the fact that a shaft (43) protrudes from the coupling part (45) of the device (40) through the discharge regulator (20) and on both sides is provided with an externally-located fixing element (46) which, by means of turning the erection rod (42) and thereby also the coupling part, (45) engages with a retaining bolt (47) on the discharge pipe (12).

12. Discharge regulator according to Claim 11, characterised by the fact that the fixing elements (46) each work together with the retaining bolt (47) in such a way that when these are closed, in the manner of a knee lever effect, an elastic sealing ring (49) between the discharge regulator (20) and the discharge pipe (12) is compressed and on attaining the final position is then released slightly, while when both are released the fixing element (46) is turned in the opposite direction via the erection rod (42) and after a turn of approximately 90°, an external curved path (46') from it comes into contact with the retaining bolt (47), and in this way the discharge regulator (20) is forced away from the discharge pipe (12), thus guaranteeing a secure separation of the two.

## Revendications

1. Régulateur de débit, en particulier pour un bassin de retenue d'eau pluviale, comprenant au moins un dispositif de réglage à la sortie du bassin de retenue, qui sert à obtenir un débit par unité de temps réduit avec une hauteur de remplissage croissante de l'eau pluviale dans le bassin de retenue en comparaison à une sortie sans dispositif de commande, le dispositif de commande étant formé par une soupape (30,50) à commande automatique en fonction de la hauteur de remplissage ayant un élément d'étranglement variant l'ouverture de sortie (21) du bassin de retenue (10), caractérisé en ce que l'élément d'étranglement est conçu comme clapet (25) ou assiette (52) disposé de telle sorte qu'il est poussé en direction de fermeture par la pression de la colonne d'eau respective et que l'élément d'étranglement coopère en outre avec un élément ressort prévu dans la soupape (30,50) de sorte que pour un bassin de retenue (10) vide il est déplacé dans une position approximativement complètement ouverte et qu'il se déplace en direction de fermeture poussant contre l'élément ressort avec une pression croissante de la colonne d'eau.

2. Régulateur de débit selon la revendication 1, caractérisé en ce que la soupape (30,50) à commande automatique est conçue de sorte que pour chaque hauteur de remplissage une masse d'eau par unité de temps approximativement constante coule du bassin de retenue (10).

3. Régulateur de débit selon la revendication 1 ou 2, caractérisé en ce que le clapet (25,52) ou l'assiette (52) se déplace en direction de fermeture en poussant contre l'élément de ressort, quand la pression de la colonne d'eau augmente, jusqu'à ce que l'ouverture de sortie (21) soit réduite au minimum pour une hauteur de remplissage maximum.

4. Régulateur de débit selon la revendication 3, caractérisé en ce que l'élément ressort se compose de plusieurs ressorts (31,32,56,57,58,59) qui sont dimensionnés tel que le clapet (25) ou l'assiette (52) se déplace en direction de fermeture inversement proportionnellement à l'augmentation de la pression de la colonne d'eau pour obtenir un débit constant par unité de temps.

5. Régulateur de débit selon une des revendications 1 à 4, caractérisé en ce que le clapet (25) est fixé d'un côté de l'ouverture de sortie (21) de façon à pouvoir basculer et peut être déplacé au côté opposé dans la position d'étranglement correspondante par rapport à la soupape (30) comprenant quatre ressorts (31,32).

6. Régulateur de débit selon une des revendications 1 à 4, caractérisé en ce que la soupape (50), dont les ressorts (56,57,58,59) et l'assiette (52) jointe à ceux-ci par l'intermédiaire d'un élément de connexion (53), est disposée de façon concentrique par rapport à l'ouverture de sortie (21).

7. Régulateur de débit selon la revendication 6, caractérisé en ce que l'élément de connexion (63) est exposé également à la pression de la colonne d'eau sur le côté frontal (66) opposé à l'assiette (52).

8. Régulateur de débit selon une des revendications précédentes, caractérisé en ce qu'un dispositif (40) est prévu pour fixer et détacher le régulateur de débit d'un tuyau de sortie (12) fixé au bassin de retenue (10), le régulateur de débit (20) pouvant être fixé au tuyau de sortie (12) de l'extérieur du bassin de retenue (10).

9. Régulateur de débit selon la revendication 8, caractérisé en ce que le dispositif (40) comprend une tige de montage (42) pouvant être accouplée au dispositif (40), cette tige servant à entrer et sortir le régulateur de débit (20) et pour fixer celui-ci au tuyau de sortie (12).

10. Régulateur de débit selon la revendication 9, caractérisé en ce que la tige de montage (42) comprend un accouplement coopérant avec un élément d'accouplement (45) du dispositif (40), ledit accouplement pouvant être actionné à partir du côté supérieur de la tige de montage par l'intermédiaire d'un bouton de réglage.

11. Régulateur de débit selon la revendication 8, 9 ou 10, caractérisé en ce qu'un arbre (43) s'étend à partir de l'élément d'accouplement (45) du dispositif (40) à travers le régulateur de débit (20) et est pourvu des deux côtés du régulateur de débit d'un élément de fixation (45) respectif extérieur, qui s'engrène dans un goujon de retenue (47) au tuyau de débit de sortie (12) par rotation de la tige de montage (40) et donc de l'élément d'accouplement (45).

12. Régulateur de débit selon la revendication 11, caractérisé en ce que les éléments de fixation (46) coopèrent avec les goujons de retenue (47) respectifs de telle sorte que lors de la fermeture de ceux-ci, un anneau d'étanchéité (49) élastique entre le régulateur de débit (20) et le tuyau de débit (12) est comprimé sous forme d'un effet de mouvement à genouillère et est de nouveau un peu libéré lorsque la position finale est atteinte, tandis que lors de l'ouverture des deux, l'élément de fixation (46) est tourné par l'intermédiaire de la tige de montage (42) en direction opposée et, qu'après une rotation d'approximativement 90°, un chemin incurvé (46') de lui entre en contact avec le goujon de retenue (47) par laquelle le régulateur de débit (20) est éloigné du tuyau de débit (12) et qu'ainsi une séparation sûre des deux est garantie.
